# EUROPÄISCHE PATENTANMELDUNG

(11) **EP 0 652 383 A1**
(43) Veröffentlichungstag der Anmeldung: **10.05.1995**
(21) Anmeldenummer: 94104781.3
(22) Anmeldetag: 25.03.1994
(51) Int. Cl.: F16C 33/14, B21D 53/10

(54) **Verfahren zum Herstellen eines Lagersitzes für ein Halbschalenlager**

(30) Priorität: 04.11.1993 DE 4337666
(71) Anmelder: KNORR-BREMSE SYSTEME FÜR NUTZFAHRZEUGE GmbH, 80809 München (DE)
(72) Erfinder: Bieker, Dieter, D-81827 München (DE); Baumgartner, Hans, Dipl.-Ing., D-85368 Moosburg (DE)

(57) **Zusammenfassung**

Es wird ein Verfahren zum Herstellen eines Lagersitzes für ein Halbschalenlager in einem Metallteil offenbart, bei dem das Metallteil durch einen Schmiede- oder Gießvorgang unter gleichzeitiger Ausbildung einer halbschalenförmigen Ausnehmung hergestellt wird, deren Durchmesser etwas kleiner als der des Halbschalenlagers ist. Sodann wird die Ausnehmung durch spanloses Verformen solange bearbeitet, bis der Durchmesser der Ausnehmung dem des Kalbschalenlagers entspricht. Dieses Verfahren zeichnet sich durch sehr geringe Kosten aus und ist darüber hinaus auch bei beengten Platzverhältnissen anwendbar.

## Beschreibung

Die vorliegende Erfindung bezieht sich auf ein Verfahren zum Herstellen eines Lagersitzes für ein in einem Metallteil vorgesehenes Halbschalenlager gemäß Anspruch 1. Ein bevorzugter, wenn auch nicht ausschließlicher Anwendungszweck des erfindungsgemäßen Verfahrens ist gemäß Anspruch 6 die Herstellung eines Lagersitzes für ein in der Zuspannvorrichtung einer Scheibenbremse angeordnetes Halbschalenlager.

Bei einem bekannten Verfahren dieser Art wird in dem Metallteil, in dem der Lagersitz hergestellt werden soll, zunächst durch Bohren oder Drehen eine Bohrung angebracht, deren Durchmesser etwa dem des Lagersitzes entspricht. Anschließend wird das Metallteil mittels eines Fräswerkzeugs oder mittels einer Säge so bearbeitet, daß der gewünschte Lagersitz als eine Hälfte der Bohrung freigelegt wird. Dieses bekannte Verfahren ist vergleichsweise aufwendig und hat darüber hinaus den Nachteil, daß mindestens eine der beiden Stirnseiten des Lagersitzes infolge der Bohrung offen ist. Dies ist in vielen Fällen unerwünscht; so ist beispielsweise der eingangs erwähnte Lagersitz für ein in der Zuspannvorrichtung einer Scheibenbremse angeordnetes Halbschalenlager in einem hinteren Gehäuseteil angeordnet, so daß eine zusätzliche Abdichtung für das Bohrloch angebracht werden muß, um die Dichtigkeit des Gehäuses zu gewährleisten.

Bei einem anderen bekannten Verfahren wird der Lagersitz für das Halbschalenlager unmittelbar durch Fräsen oder Schleifen hergestellt. In diesem Fall ist es möglich, beide Stirnseiten des Lagersitzes geschlossen zu halten. Dieses Verfahren erfordert jedoch vergleichsweise aufwendige Verarbeitungsschritte und erhöht somit die Herstellungskosten nicht unerheblich. In vielen Fällen, wie auch insbesondere bei der Herstellung des erwähnten Gehäuseteils einer Zuspannvorrichtung, kann dieses Verfahren jedoch nicht eingesetzt werden, da keine ausreichenden Platzverhältnisse für eine stabile Aufnahme des Fräs- oder Schleifwerkzeugs gegeben sind.

Der Erfindung liegt die Aufgabe zugrunde, ein Herstellungsverfahren gemäß dem Oberbegriff des Anspruchs 1 zu schaffen, das sich durch geringe Kosten auszeichnet und auch bei beengten Platzverhältnissen problemlos durchzuführen ist.

Diese Aufgabe wird erfindungsgemäß mit den im Kennzeichnungsteil des Anspruchs 1 angegebenen Verfahrensschritten gelöst.

Erfindungsgemäß wird der Lagersitz demnach hergestellt, indem das betreffende Metallteil durch einen Schmiede- oder Gießvorgang hergestellt wird, wobei gleichzeitig eine halbschalenförmigen Ausnehmung ausgebildet wird, deren Durchmesser etwas kleiner als der des Halbschalenlagers ist. Im Anschluß hieran wird die Ausnehmung solange einer spanlosen Verformungsbearbeitung unterzogen, bis der Durchmesser der Ausnehmung dem des Halbschalenlagers entspricht. Die erfindungsgemäß vorgesehene spanlose Verformung ist mit wenig Aufwand verbunden und kann somit sehr preiswert durchgeführt werden. Darüber hinaus stellen auch beengte Platzverhältnisse kein Problem dar. Schließlich zeichnet sich das erfindungsgemäße Verfahren auch dadurch aus, daß die Stirnwände des Lagersitzes bei der Bearbeitung nicht zwangsläufig freigelegt werden; eine nachträgliche seitliche Abdichtung des betreffenden Metallteils ist somit nicht erforderlich.

Es hat sich überraschend herausgestellt, daß es gemäß der im Anspruch 2 angegebenen Weiterbildung der Erfindung von besonderem Vorteil ist, die Oberfläche der Ausnehmung beim Schmiede- oder Gießvorgang mit einem Profil zu versehen. In diesem Fall kann die anschließende spanlose Verformung nämlich mit besonders wenig Kraftaufwand durchgeführt werden; eine Beschädigung des Metallteils durch die spanlose Bearbeitung ist daher ausgeschlossen. Ein weiterer Vorteil eines derartigen Profils liegt darin, daß sich durch die jeweilige Form des Profils bei gleichbleibenden bzw. konstant gehaltenen Arbeitsparametern der spanlosen Verformungsbearbeitung ggf. die genauen Endabmessungen des Lagersitzes steuern lassen. Darüber hinaus ist es möglich, mittels der Tiefenabmessung und/oder der Form des Profils die erzielbare Oberflächengüte zu steuern.

Das genannte Profil kann beispielsweise in Form von trapez-, sägezahn- oder wellenförmig verlaufenden Rippen ausgebildet werden. Diese können z.B. parallel oder auch quer zur Längsachse der Ausnehmung angeordnet werden. Alternativ hierzu ist es auch möglich, das Profil in Form von im wesentlichen gleichmäßig verteilten Vorsprüngen oder Vertiefungen auszubilden. Falls das betreffende Metallteil mittels eines Gießvorgangs hergestellt wird, kann das jeweilige Profil durch entsprechende Ausbildung eines Negativprofils in der Gußform besonders einfach und nahezu ohne zusätzliche Bearbeitungskosten hergestellt werden.

Es wurde gefunden, daß die erfindungsgemäße spanlose Verformung der Ausnehmung besonders kostengünstig und vergleichsweise schnell durch Prägen oder Schlagen erfolgen kann. Zwar ist mit diesen Verformungsverfahren keine allzu große Genauigkeit erreichbar, doch ist diese in vielen Fällen ausreichend. Wenn gleichwohl eine höhere Genauigkeit gefordert ist, so kann die Verformung durch sogenanntes "Rollieren" ausgeführt werden kann, bei dem die Oberfläche mit einer Rolle geglättet wird. Gegebenenfalls ist es auch möglich, zunächst durch Prägen oder Schlagen eine Rohbearbeitung durchzuführen und sodann durch Rollieren bis zum Erreichen der gewünschten Fertigungstoleranz eine Nachbearbeitung auszuführen.

Die Erfindung wird nachstehend anhand der Beschreibung eines Ausführungsbeispiels unter Bezugnahme auf die Zeichnung näher erläutert. Es zeigen:
**Fig.1A** anhand eines schematischen Querschnitts durch ein Metallteil den Verlauf eines beispielhaften Lagersitzes;
**Fig.1B** einen vergrößerten Ausschnitt aus Fig.1A; und
**Fig.2** die Zuspannvorrichtung einer Scheibenbremse, bei der der Lagersitz eines Drehhebels nach der Lehre der Erfindung hergestellt wird.

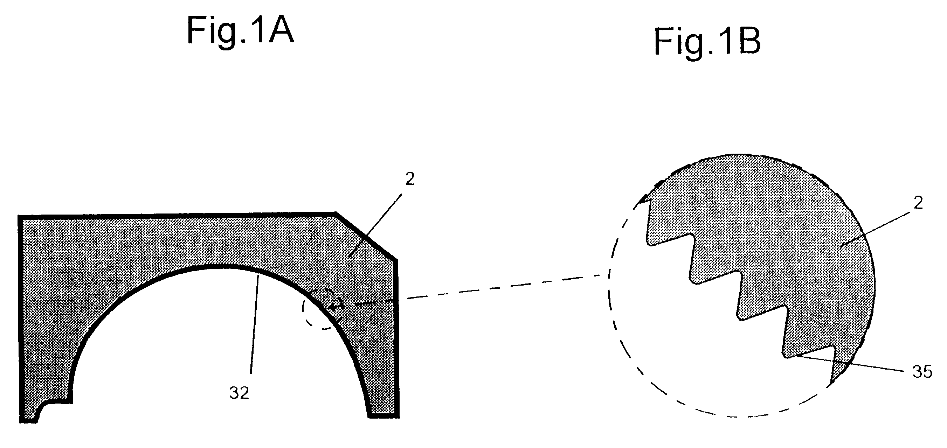

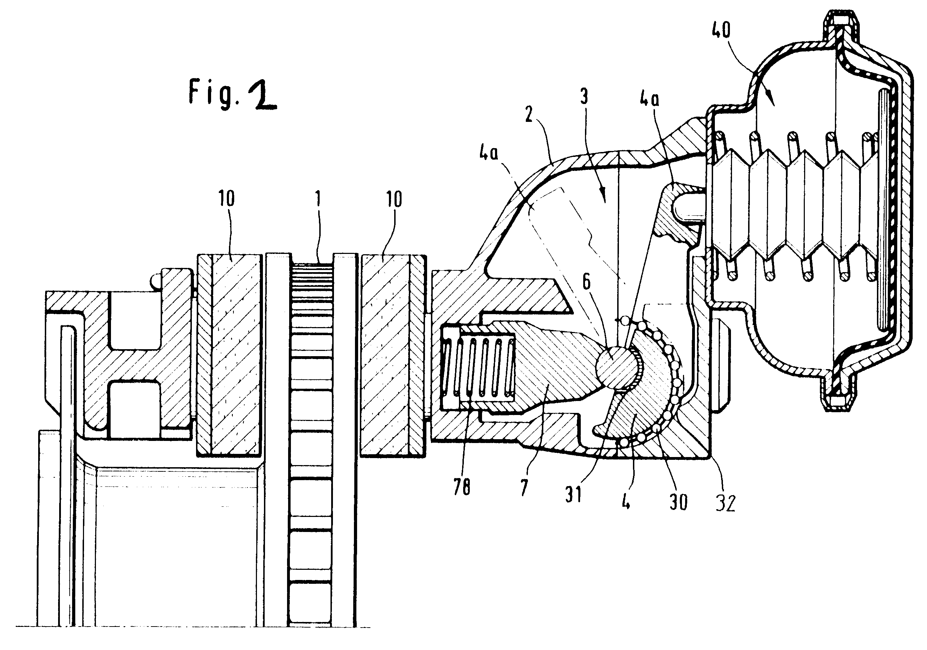

In den Fig.1A und 1B ist ein Metallteil 2 gezeigt, in dem nach der Lehre der Erfindung ein Lagersitz 32 ausgebildet worden ist. Zu diesem Zweck wird zunächst ein Rohling des Metallteils durch einen Schmiede- oder Gießvorgang hergestellt, wobei in dem Rohling gleichzeitig eine Ausnehmung ausgebildet wird, deren Durchmesser etwas kleiner als der des Halbschalenlagers ist, das zur Aufnahme in dem Lagersitz vorgesehen ist.

Wie insbesondere aus der Detaillvergrößerung der Fig.1B zu erkennen ist, wird die Oberfläche der Ausnehmung 32 mit einem Profil 35 versehen, das im dargestellten Beispielsfall durch Rippen mit einem trapezförmigen Verlauf nach Art einer Innenverzahnung gebildet wird, die in Axialrichtung des Lagersitzes bzw. der Ausnehmung 32 angeordnet sind. Es ist jedoch alternativ hierzu möglich, auch ein anderes Profil vorzusehen, wie z.B. ein noppenförmiges Profil.

Wenn das Metallteil 2 mittels eines Gießvorgangs hergestellt wird, wird das Profil 35 durch entsprechende Ausbildung eines Negativprofils in der (nicht gezeigten) Gußform ausgebildet. Jedoch stellt die Ausbildung des gewünschten Profils auch bei Anwendung eines Schmiedeverfahrens zur Herstellung des Rohlings kein Problem dar.

Die Oberfläche der Ausnehmung 32 des auf die genannte Weise hergestellten Rohlings 2 wird sodann einer spanlosen Verformung durch Prägen, Schlagen oder Rollieren unterzogen, wodurch erreicht wird, daß das Profil 35 gleichsam eingeebnet wird und sich eine vergleichsweise glatte Lagersitzfläche ergibt, deren Durchmesser dem Außendurchmesser des Halbschalenlagers entspricht. Die erzielbare Oberflächengüte und die genauen Abmessungen des Lagersitzes lassen sich einerseits durch die Art und Weise der Durchführung der spanlosen Verformung und andererseits durch die Tiefe und Form des jeweiligen Profils exakt steuern. Somit wird erreicht, daß trotz geringer Verfahrenskosten eine gute Paßgenauigkeit mit geringen Toleranzwerten erzielbar ist.

In Fig.2 ist die Zuspannvorrichtung 3 einer Scheibenbremse gezeigt, deren wesentliches Konstruktionselement ein Drehhebel 4 ist, der bremsscheibenabgewandt in einem Halbschalenlager 30 in Form eines Rollenlagers gelagert ist, dessen Lagersitz 32 im rückwärtigen Teil eines Gehäuses 2 der Zuspannvorrichtung 3 ausgebildet ist. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit Druckluft beaufschlagt wird, wird der Betätigungsarm 4a des Drehhebels 4 folglich von seiner Ruheposition in die in Fig.1 in gestrichelter Darstellung angedeutete Position bewegt, wodurch zwei Bremsbacken 10 zur Oberfläche einer Bremsscheibe 1 hin gedrückt werden. Die dem Halbschalenlager 30 abgewandte Seite des Drehhebels 4 ist über einen als Nocken dienenden Exzenter 6 mit einer Traverse 7 gekoppelt, die sich parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 sitzt in einer Ausnehmung, innerhalb der eine Spiralfeder 78 angeordnet ist, die die Traverse 7 zum Drehhebel 4 hin vorspannt.

Eine einwandfreie Funktion der oben erläuterten Zuspannvorrichtung ist nur dann gewährleistet, wenn das Gehäuse 2 weitgehend dicht ist und dadurch verhindert, daß Feuchtigkeit oder Schmutz ins Innere gelangen. Da der Lagersitz 32 des Halbschalenlagers 30 aufgrund der beengten Platzverhältnisse nicht durch Fräsen hergestellt werden kann, wurde bislang das eingangs erläuterte Verfahren angewandt, bei dem zunächst im Bereich des Lagersitzes eine Bohrung angebracht wird. Zur Abdeckung der Stirnseite dieser Bohrung mußte daher eine Abdeckung oder ein anderes Verschlußelement vorgesehen werden.

Wenn zur Herstellung des Lagersitzes 32 hingegen das erfindungsgemäße Verfahren angewandt wird, entsteht im Gehäuse 2 keine unerwünschte Öffnung, so daß die Zusatzkosten für die Abdeckung entfallen. Da das erfindungsgemäße Verfahren darüber hinaus noch preiswerter durchführbar ist als die bekannten Verfahren, ergibt sich insgesamt eine merkliche Reduzierung der Herstellungskosten der Zuspannvorrichtung 3.

## Patentansprüche

1. Verfahren zum Herstellen eines Lagersitzes (32) für ein Halbschalenlager (30) in einem Metallteil (2), *gekennzeichnet durch* die folgenden Schritte :
**[a]** Herstellen des Metallteils (2) durch einen Schmiede- oder Gießvorgang unter Ausbildung einer halbschalenförmigen Ausnehmung (32), deren Durchmesser etwas kleiner als der des Halbschalenlagers (30) ist, und
**[b]** spanloses Verformen der Ausnehmung (32), bis der Durchmesser der Ausnehmung (32) dem des Halbschalenlagers (30) entspricht.

2. Verfahren nach Anspruch 1, *dadurch gekennzeichnet, daß* die Oberfläche der Ausnehmung (32) beim Schmiede- oder Gießvorgang mit einem Profil (35) versehen wird.

3. Verfahren nach Anspruch 2, *dadurch gekennzeichnet, daß* das Profil (35) in der Oberfläche der Ausnehmung (32) in Form von trapez-, sägezahn- oder wellenförmig verlaufenden Rippen ausgebildet wird.

4. Verfahren nach Anspruch 2, *dadurch gekennzeichnet, daß* das Profil (35) in der Oberfläche der Ausnehmung (32) in Form von im wesentlichen gleichmäßig verteilten Vorsprüngen oder Noppen ausgebildet wird.

5. Verfahren nach einem der Ansprüche 1 bis 4, *dadurch gekennzeichnet, daß* die spanlose Verformung der Ausnehmung (32) durch Prägen, Schlagen oder Rollieren erfolgt.

6. Anwendung des Verfahrens nach einem der Ansprüche 1 bis 5 zur Herstellung eines Lagersitzes (32) für ein in der Zuspannvorrichtung (3) einer Scheibenbremse angeordnetes Halbschalenlager (30).
